# FASCICULE DE BREVET EUROPEEN

(11) **EP 0 799 396 B1**
(45) Date de publication et mention de la délivrance du brevet: **02.08.2000**
(21) Numéro de dépôt: 96934613.9
(22) Date de dépôt: 10.10.1996
(51) Int. Cl.: F16L 37/084

(54) **COUPLEUR RAPIDE A DESACCOUPLEMENT A DEUX PHASES**
SCHNELLVERBINDUNG MIT ENTKUPPLUNG IN ZWEI STUFEN
QUICK COUPLING WITH TWO-STAGE UNCOUPLING

(30) Priorité: 20.10.1995 FR 9512371
(43) Date de publication de la demande: 08.10.1997
(73) Titulaire: SOCIETE Y.T.O., F-75001 Paris (FR)
(72) Inventeur: LARBUISSON, Patrick Société Y.T.O., F-75001 Paris (FR)
(74) Mandataire: Kügele, Bernhard
(86) Numéro de dépôt international: EP9604400
(87) Numéro de publication internationale: WO9715779

(56) Documents cités:
- EP-A- 0 375 581
- CH-A- 472 623
- DE-U- 7 522 173
- FR-A- 1 503 989
- FR-A- 2 514 855

## Description

L'invention concerne un coupleur rapide à désaccouplement à deux phases permettant le dégagement de la pression d'un fluide dans le coupleur avant le désaccouplement complet, comportant une pièce femelle et une pièce mâle, la pièce femelle comportant du côté amont un clapet d'obturation qui est ouvert lorsque les pièces femelle et mâle sont accouplées et qui est fermé lors du désaccouplement, la pièce mâle comportant une surface extérieure munie d'une collerette, ainsi qu'un verrou dans la pièce femelle, mobile dans un sens radial et comportant un alésage orienté dans le sens axial de la pièce femelle et traversé par la pièce mâle, ledit verrou comportant sur la surface de son alésage deux projections de rétention destinées à coopérer séparément avec la collerette de la pièce mâle et séparées l'une de l'autre dans le sens axial.

On connaît par le brevet français FR-A-1.503.989 un coupleur rapide dans lequel le verrou comporte deux dents pour coopérer avec une collerette formée sur la surface extérieure de la pièce mâle, ces deux dents étant disposées de part et d'autre de la pièce mâle sur le verrou de sorte à produire un dégagement de la pièce mâle de la pièce femelle en deux phases correspondant à un seul enfoncement et un seul relâchement du verrou. Toutefois l'engagement de la pièce mâle dans le joint d'étanchéité de la pièce femelle est tel que la pièce mâle n'est pas entièrement dégagée du joint ou de la partie de guidage axial respectivement lorsqu'il se trouve dans sa position intermédiaire, ce qui ne permet pas un dégagement rapide de la pression résiduelle en aval du clapet de la pièce femelle, ceci pouvant résulter en un coup de fouet lorsqu'on relâche le verrou trop vite.

Afin de pallier à cet inconvénient, il a été proposé dans la demande de brevet français FR-A-2.514.855 un coupleur rapide dans lequel le verrou comporte trois dents de blocage, dont une première et une seconde dents sont arrangées de façon séparées dans le sens axial du coupleur à l'intérieur d'un alésage radial du verrou, de façon à délimiter une certaine distance axiale dans laquelle la pièce mâle peut se déplacer, et où lesdites première et seconde dents sont arrangées du même côté de l'ouverture radiale du verrou par rapport à la pièce mâle qui est insérée au travers dudit trou radial du verrou, et où la troisième dent est arrangée à une position axialement entre la première et la seconde dent et du côté opposé de celles-ci dans le trou radial du verrou. De cette façon, un épaulement formé à la surface extérieure de la pièce mâle est verrouillé dans sa position d'accouplement complet par la première dent, et une première opération d'enfoncement du verrou dégage cette première dent de l'épaulement de la pièce mâle en même temps que la troisième dent vient s'engager dans le passage axial de l'épaulement de la pièce mâle lors de son extraction afin de permettre que la pièce mâle recule d'une distance axiale correspondant à la distance axiale entre la première et la troisième dent. Ensuite, le verrou est relâché afin qu'il retourne dans la position initiale entraîné par un ressort, et la troisième dent se dégage de l'épaulement de la pièce mâle suite à ce relâchement en même temps que la seconde dent s'engage dans le passage axial de l'épaulement de la pièce mâle afin de permettre que ladite pièce mâle recule de nouveau d'une distance axiale correspondant à la différence des positions axiales entre la troisième et la seconde dent qui retient la pièce mâle dans une troisième position axiale avant que ladite pièce mâle soit finalement dégagée par une deuxième opération d'enfoncement du verrou qui dégage la deuxième dent de l'épaulement de la pièce mâle permettant l'extraction complète de la pièce mâle à la suite de quoi le verrou est relâché et retourne dans sa position initiale.

De cette façon, la pièce mâle est dégagée de son accouplement avec la pièce femelle par une séquence de deux poussées sur le verrou, une première poussée permettant un désaccouplement partiel lors duquel la partie du fluide sous pression qui se trouve en aval du clapet peut s'échapper du coupleur avant le désaccouplement complet des pièces mâle et femelle, ceci permettant d'éviter un coup de fouet occasionné par ladite pression résiduelle lors du désaccouplement, et en particulier si le dégagement des pièces mâle et femelle intervient durant la période avant la fermeture complète du clapet.

Le but de la présente invention est de fournir un coupleur rapide à désaccouplement à deux phases, et en particulier un coupleur rapide à désaccouplement à deux phases permettant le dégagement de la pression d'un fluide dans le coupleur avant le désaccouplement complet et ne nécessitant qu'une activation et relâchement du verrou et qui permet de maintenir temporairement les deux parties reliées après relâchement du verrou et qui permet soit de les ré-accoupler soit de les dégager complètement l'une de l'autre, non pas par une seconde action sur le verrou comme décrit dans la demande de brevet français FR-A-2.514.855, mais par une simple poussée de la partie mâle contre la partie femelle, ce qui est possible même en tenant le tuyau relié au mâle pour lui donner un petit coup axial.

Ce but est atteint par un coupleur comme décrit en préambule, qui se caractérise par le fait que les deux projections dans l'alésage du verrou ont chacune la forme d'une demi-collerette dont au moins une est formée par deux surfaces essentiellement en forme de serpe conique, surfaces dont au moins une qui est orientée vers l'amont est susceptible d'épouser au moins 180° de la collerette de la pièce mâle.

De façon avantageuse, la surface orientée vers l'amont de la seconde demi-collerette tronconique située axialement le plus en aval du verrou est également susceptible d'épouser au moins 180° de la collerette de la pièce mâle.

La surface orientée vers l'aval de la demi-collerette tronconique située axialement le plus en amont du verrou peut entourer la collerette sur moins de 180°.

Selon une forme d'exécution de la présente invention, le verrou est déplacé radialement par la main.

Selon une autre forme d'exécution de la présente invention, le verrou est activé par la surface de came d'une douille qui se déplace axialement par la main.

La partie femelle peut comporter un premier joint d'étanchéité destiné à rendre étanche l'intérieur de la pièce femelle vers l'extérieur lorsque le clapet se trouve dans une position ouverte et de plus qui rend étanche ledit clapet lorsqu'il se trouve dans sa position fermée.

La partie femelle peut comporter un second joint d'étanchéité destiné à rendre étanche l'accouplement entre le clapet et la partie mâle.

Le clapet peut comporter un cylindre vide comportant une partie de tête fermée et une partie cylindrique munie de trous obturables par ledit premier joint d'étanchéité lorsque le clapet est fermé, ladite partie cylindrique comportant deux parties à diamètre différent d'un alésage axial de ladite partie cylindrique, formant entre elles un épaulement et une rainure circonférentielle qui sert de siège pour un second joint d'étanchéité, la partie à diamètre supérieur recevant une partie frontale de la partie.

La partie femelle peut comporter un ressort sollicitant le clapet dans sa position de fermeture.

La partie de tête du clapet peut comporter une surface tronconique qui est susceptible d'épouser une surface tronconique du premier joint d'étanchéité.

La partie à diamètre supérieur de la partie cylindrique du clapet peut comporter plusieurs alésages radiaux en aval du second joint d'étanchéité, permettant, lorsque le clapet est fermé et lorsque l'extrémité de la partie mâle est dégagée du joint du clapet, de dégager le fluide sous pression résiduelle qui se trouve en aval du clapet, vers l'extérieur.

La pièce femelle peut comporter en une position avale par rapport au clapet un alésage radial recevant le verrou, cet alésage radial s'ouvre d'un côté de la partie femelle par une ouverture suffisamment grande pour le passage du verrou et à l'extrémité opposée dudit alésage radial de la pièce femelle se trouve une ouverture plus petite en communication avec les ouvertures radiales de la partie à diamètre supérieur de la partie cylindrique du clapet, pour permettre l'échappement du fluide résiduel en aval du clapet, vers l'extérieur de la partie femelle avant le désaccouplement complet des parties mâle et femelle.

Ce coupleur peut comporter une ouverture aménagée dans la partie frontale de la pièce femelle ou toute autre ouverture permettant la décompression du fluide en aval du clapet.

L'invention va maintenant être décrite en détail en se référant aux dessins à titre d'exemple.

Les figures 1 à 6 montrent un coupleur selon une forme d'exécution de la présente invention dans six positions différentes.

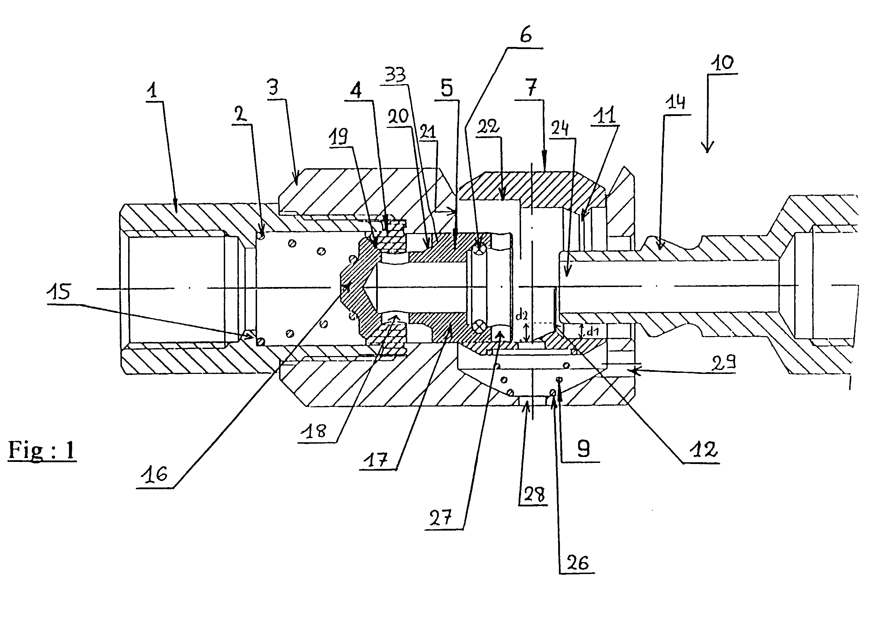

Ainsi, la figure 1 montre en coupe longitudinale ce coupleur dans une position complètement désaccouplée.

La figure 2 montre en coupe longitudinale (fig.2a) et en coupe transversale (fig.2b) au niveau du verrou ce coupleur en position partiellement accouplée.

La figure 3 montre en coupe longitudinale (fig.3a) et en coupe transversale (fig.3b) au niveau du verrou ce coupleur en position complètement accouplée.

La figure 4 montre en coupe longitudinale (fig.4a) et en coupe transversale (fig.4b) au niveau du verrou ce coupleur en position de sécurité partiellement désaccouplée après poussée sur le verrou.

La figure 5 montre en coupe longitudinale (fig.5a) et en coupe transversale (fig.5b) au niveau du verrou ce coupleur en position de sécurité partiellement désaccouplée après relâchement du verrou.

La figure 6 montre en coupe longitudinale (fig.6a) et en coupe transversale (fig.6b) au niveau du verrou ce coupleur en position juste avant le désaccouplement complet.

La figure 7 montre en coupe longitudinale un coupleur selon une autre forme d'exécution de la présente invention dans une position complètement accouplée.

La figure 8 montre quatre exemples de pièces mâles ayant des profils de collerette appropriés pour la présente invention.

En se retournant maintenant vers la figure 1, on voit un coupleur selon la présente invention en position complètement désaccouplée, le côté gauche de la figure représentant le côté amont où se trouve une source de fluide sous pression, et le côté droit représentant le côté aval vers lequel le fluide sous pression s'écoule suite à l'accouplement complet du coupleur.

La partie femelle comporte une première douille 3, dite extérieure, qui comporte de son côté amont un filetage intérieur ainsi qu'une seconde douille 1 comportant sur son côté aval un filetage extérieur qui est vissé dans le filetage intérieur de la douille extérieure 3 en formant un logement pour un joint d'étanchéité 4 qui est en saillie vers l'intérieur des deux douilles.

La douille intérieure 1 comporte un épaulement 15 formant un siège pour un ressort 2.

A l'intérieur de la douille extérieure 3 et partiellement également à l'intérieur de la douille intérieure 1 se trouve un clapet 5 comportant une partie de tête 16 ainsi qu'une partie cylindrique 17 qui est fermée de son côté amont par ladite partie de tête 16, ledit clapet 5 étant disposé de façon axialement coulissante à l'intérieur d'une ouverture axiale de la douille extérieure 3 dont le diamètre intérieur est sensiblement égal au diamètre extérieur de la partie cylindrique 17 du clapet 5 de façon à permettre un guidage exact du clapet 5 lors de sont mouvement axial à l'intérieur de la douille extérieure 3 durant les différentes étapes d'accouplement et de désaccouplement entre les pièces mâle et femelle.

A son extrémité en amont, la partie cylindrique 17 comporte des ouvertures radiales 18, et la partie de tête 16 d'un côté ainsi que la partie cylindrique de l'autre côté de ces ouvertures comportent une surface tronconique 19 et une surface annulaire respectivement qui est formée par une génératrice polygonale 20, susceptible d'épouser ou d'écraser une des deux surfaces correspondantes du joint d'étanchéité 4 lors de la position d'ouverture ou de fermeture du clapet 5 respectivement.

Les figures 1, 2, 4, 5 et 6 montrent des positions du coupleur dans lesquelles le clapet 5 est fermé, c'est-à-dire dans lesquelles la surface tronconique 19 de l'élément de tête 16 épouse la surface tronconique du joint d'étanchéité 4 de façon à fermer hermétiquement la partie de la pièce femelle qui se trouve en amont du clapet 5.

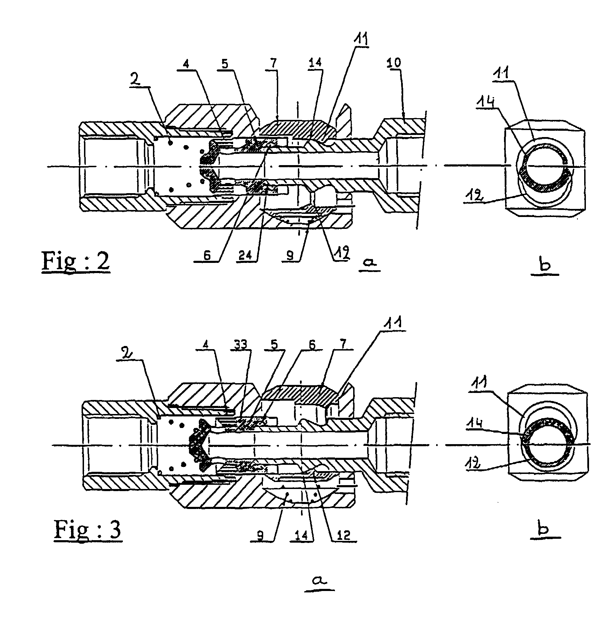

La figure 3 montre la position d'ouverture du clapet 5 où la surface "polygonale" 20 est en contact avec le joint d'étanchéité 4 de façon à ce que les ouvertures 18 soient ouvertes pour permettre le passage d'un fluide sous pression à partir du côté amont de la pièce femelle jusqu'à l'intérieur du clapet 5 en passant par les ouvertures 18.

La partie cylindrique 17 du clapet 5 comporte un alésage intérieur comportant deux sections à diamètre différent, l'intersection de ces deux parties formant un épaulement suivi d'une rainure circonférentielle dans laquelle se loge un joint d'étanchéité 6 qui est destiné à rendre étanche l'intérieur du clapet 5 et l'intérieur de la pièce mâle 10 vers l'alésage de la douille extérieure 3 lors de l'accouplement complet de la partie mâle 10 à l'intérieur de la partie femelle.

La douille extérieure 3 comporte un alésage radial 21 de diamètre supérieur au diamètre de son alésage axial, et ledit alésage radial 21 loge un verrou 7 de forme cylindrique.

Ce verrou 7 comporte un alésage radial 22 qui se trouve dans une position plus ou moins coaxiale avec l'alésage axial de la douille extérieure 3, afin de permettre ou non le passage de la partie mâle 10 au travers de l'alésage radial 22 du verrou 7.

La pièce mâle 10 comporte une extrémité d'introduction 24 comportant un diamètre extérieur sensiblement égal au diamètre intérieur de la partie à diamètre supérieur de la partie cylindrique 17 du clapet 5 de façon à ce que l'extrémité 24 de l'élément mâle 10 puisse être introduite dans la partie cylindrique 17 du clapet jusqu'à ce qu'elle bute contre le joint d'étanchéité 6.

En aval de l'extrémité d'introduction 24 de la partie mâle 10, celle-ci comporte un épaulement circonférentiel ou collerette 14 qui est représentée sur la figure 1 par une projection comportant une pente du côté aval et une pente du côté amont, la pente située du côté amont étant plus raide que celle située du côté aval.

Comme on peut le voir en coupe longitudinale sur la figure 1, l'alésage radial 22 du verrou 7 comporte une projection 11 ayant la forme d'une demi-collerette tronconique, cette première demi-collerette 11 étant située du côté d'une extrémité accessible du verrou. 7, et une projection 12 en forme de demi-collerette tronconique, cette seconde demi-collerette 12 étant située du côté diamétralement opposé à la première demi-collerette 11 et décalée en amont de celle-ci.

Ces deux demi-collerettes 11 et 12 sont chacune formées par deux surfaces ayant la forme d'une serpe, c'est-à-dire une forme recourbée en croissant, qui s'étendent sur environ 180° d'un cercle défini par une coupe radiale de la paroi intérieure de l'alésage du verrou 7.

Sur la figure 1 représentant une coupe longitudinale du coupleur, on peut voir que ces deux demi-collerettes 11 et 12 sont chacune représentées par une projection ayant une pente s'étendant du côté amont et une pente s'étendant du côté aval, la pente située du côté aval étant plus raide que celle située du côté amont, la pente du côté aval correspondant à la pente située du côté amont de la collerette de la pièce mâle et la pente située du côté amont correspondant à la pente située du côté aval de la collerette de la pièce mâle.

Les surfaces en forme de serpe orientées vers l'amont de chacune de ces deux demi-collerettes sont susceptibles d'épouser au moins 180° de la collerette de la pièce mâle.

Un ressort 9 s'appuie sur un épaulement 26 de l'alésage radial 21 de la douille extérieure 3 pour solliciter le verrou 7 dans une position de repos comme illustrée en figure 1.

Dans cette position complètement désaccouplée représentée par la figure 1, le circuit de fluide est vide, le fluide sous pression en amont est bloqué par le clapet 5 sollicité contre le joint d'étanchéité 4 par le ressort 2 et par la pression du fluide et le verrou 7 poussé par le ressort 9 est en position de repos.

La partie à diamètre supérieur de la partie cylindrique 17 du clapet 5 comporte en aval du joint d'étanchéité 6 des ouvertures radiales 27 qui permettent, dans la position fermée du clapet 5 comme indiqué sur la figure 1, la communication entre l'intérieur de la partie cylindrique 17 et l'alésage radial 21 du verrou 7.

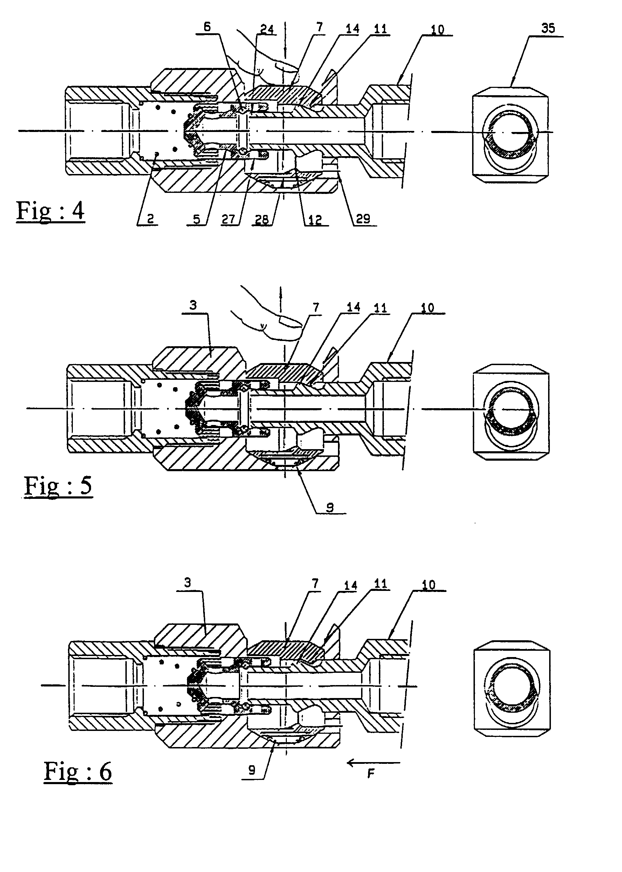

Cet alésage radial 21 comporte en outre une ouverture 28 dans la proximité de l'épaulement 26 qui sert de siège pour le ressort 9, pour permettre qu'une pression résiduelle du fluide contenu à l'intérieur de la partie cylindrique 17 du clapet 5 et à l'intérieur de la partie mâle 10 ainsi que dans tous les conduits avals puisse s'échapper vers l'extérieur durant une phase d'opération du coupleur qui est illustrée en figure 4.

Afin d'obtenir la position partiellement accouplée telle que représentée sur la figure 2, on pousse la pièce mâle 10 à l'intérieur de la pièce femelle, ce qui déplace vers le bas le verrou 7 par l'intermédiaire de la demi-collerette 11 et de la collerette 14 de la pièce mâle.

Le ressort 9 se comprime et la partie frontale 24 de la pièce mâle 10 vient faire étanchéité contre le joint 6. Le clapet 5 est toujours étanche sur son joint 4.

Dans cette position représentée par la figure 2, la pièce mâle est retenue dans la pièce femelle car la demi-collerette 11 encercle sur au moins 180° du côté aval la collerette de la pièce mâle tout en épousant sa forme. La position de la pièce mâle par rapport au verrou est particulièrement mise en évidence sur la figure 2b.

Pour obtenir la position complètement accouplée telle que représentée sur la figure 3, on continue à pousser la pièce mâle 10 dans la pièce femelle de manière que la partie de tête 16 du clapet 5 repousse le ressort 2, que la surface "polygonale" 20 ne soit plus en contact avec le joint d'étanchéité 4 et que les ouvertures 18 soient ouvertes et permettent le passage du fluide, sous pression ou non, à partir du côté amont de la pièce femelle jusqu'à l'intérieur du clapet 5 en passant par les ouvertures 18.

Pendant cette opération, le verrou 7 se déplace vers le haut poussé par le ressort 9 de manière à se retrouver dans sa position initiale de repos.

Dans cette position complètement accouplée, la pièce mâle 10 est retenue dans la pièce femelle car la demi-collerette 12 encercle en aval la collerette 14 de la partie mâle sur au moins 180° tout en épousant sa forme. La position de la pièce mâle par rapport au verrou est particulièrement mise en évidence par la figure 3b.

Ce blocage en position accouplée est dû au fait que la surface en forme de serpe conique de la collerette 14 ne peut pas glisser le long d'une surface opposée ayant la même forme telle que la surface de la demi-collerette 12, si celle-ci s'étend sur 180° ou plus, de la surface en forme de serpe.

Aucun blocage dans le sens accouplement ne se produit en raison du fait que, comme montré sur la figure 1, la distance d1 est inférieure à la distance d2, ce qui implique que dans le sens accouplement, la demi-collerette 12 encercle la collerette 14 de la pièce mâle sur moins de 180° alors que dans le sens désaccouplement, la demi-collerette 12 encercle la collerette 14 de la pièce mâle sur 180°, ou plus.

L'étanchéité vers l'extérieur est assurée par le joint 6 qui s'appuie sur la partie frontale 24 de la pièce mâle 10 et par l'épaulement 33 (Fig.3a) du clapet 5 qui s'appuie contre le joint 4.

Lorsque l'on souhaite un désaccouplement des parties mâle et femelle, on exerce une pression manuelle sur l'extrémité accessible du verrou 7 de sorte que le verrou descend de manière à dégager la collerette 14 de la demi-collerette 12 après quoi la pièce mâle recule dans le sens de dégagement jusqu'à ce qu'elle soit retenue au niveau de sa collerette 14 par la demi-collerette 11 qui se trouve à une certaine distance axiale en aval de la demi-collerette 12.

Un tel enfoncement du verrou 7 permet donc un recul de la pièce mâle 10 sous l'effet de la pression du fluide intérieur jusqu'à une position axiale dans laquelle la collerette 14 bute contre la demi-collerette 11. Ainsi, la demi-collerette 11 entoure la collerette 14 sur au moins 180° en épousant sa forme.

Durant ce recul, dont la position finale dite position partiellement désaccouplée est représentée par la figure 4, le clapet 5 est poussé dans sa position fermée par le ressort 2 et par la pression du fluide en amont et l'extrémité de la partie mâle 10 se dégage à la fois du joint d'étanchéité 6 et au moins partiellement des ouvertures radiales 27 de la partie cylindrique 17 du clapet 5 afin de permettre l'échappement du fluide sous pression qui se trouve en aval du clapet 5 au travers des ouvertures 27, de l'alésage radial 21 du verrou 7 et finalement de l'ouverture 28 ou 29 afin d'enlever toute force occasionnée par la pression du fluide situé en aval du clapet 5, et permettant par la suite la continuation du dégagement jusqu'au dégagement complet de la pièce mâle par le recul de la demi-collerette 11 dans sa position initiale correspondant à la position de repos du verrou sans le danger d'un coup de fouet qui se produit normalement lorsqu'un désaccouplement de la pièce mâle est permis sans restriction alors que les conduits en aval du clapet 5 sont encore sous pression.

L'alésage 29 parallèle à l'axe est prévu dans la partie frontale de la pièce femelle faisant office de seconde voie d'échappement de la pression.

La figure 5 montre le coupleur en position partiellement désaccouplée de sécurité après avoir cessé la pression sur le verrou 7. La demi-collerette 11 entoure la collerette 14 de la pièce mâle sur au moins 180°, en aval de celle-ci, ce qui crée la retenue de la pièce mâle dans la pièce femelle. Cette retenue est assurée par la poussée due à la pression du circuit aval jusqu'au dégagement de la pression résiduelle, et ensuite par la simple friction entre les deux surfaces en forme de serpe conique de la demi-collerette 11 et de la collerette 14 respectivement qui empêche le retour du verrou dans sa position de repos. La partie mâle 10 est ainsi bloquée dans cette position, et le verrou 7 reste en position basse en comprimant le ressort 9. Dans cette position, l'ensemble reste en équilibre instable et la partie mâle 10 ne peut pour l'instant être retirée de la pièce femelle.

A partir de cette position dite partiellement désaccouplée de sécurité, on peut soit ré-accoupler les deux parties du coupleur en exerçant une poussée axiale dans le sens accouplement jusqu'à la position complètement accouplée telle que représentée sur la figure 3, soit dégager complètement les deux parties l'une de l'autre.

Pour séparer la pièce mâle de la pièce femelle, on exerce une courte poussée axiale dans le sens accouplement pour dégager les deux surfaces en serpe respectives de la demi-collerette 11 et de la demi-collerette 14, ce qui a pour effet de désolidariser la demi-collerette 11 de la collerette 14. La figure 6 montre la position juste avant le désaccouplement complet, où la pièce mâle est légèrement renfoncée dans le sens de la flèche F. Le désaccouplement complet est obtenu par une poussée axiale sur la partie mâle dans le sens accouplement en direction de la flèche F, jusqu'à ce que le verrou 7 soit libéré et soit remonté dans sa position initiale de repos poussé par le ressort 9. De ce fait, la demi-collerette 11 se dégage de la trajectoire axiale de la collerette 14 et le mâle 10 peut être retiré de manière à ce que le coupleur soit complètement désaccouplé comme représenté sur la figure 1.

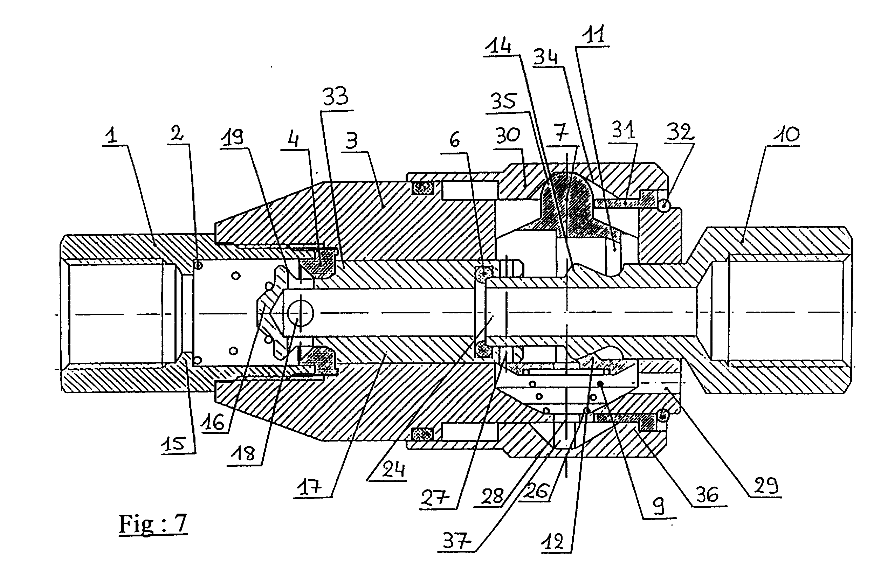

La figure 7, qui représente une autre forme d'exécution de la présente invention, montre un coupleur identique à celui représenté sur les figures 1 à 6, mais comportant un verrou 7 qui est actionné par la surface de came d'une douille et non pas directement par poussée du verrou par la main comme dans la forme d'exécution représentée sur les figures 1 à 6. Les numéros de référence sont identiques à ceux utilisés sur les figures 1 à 6.

Le coupleur représenté sur la figure 7 est en position complètement accouplée.

Le verrou 7 comporte une partie sphérique 35 et est entouré par une douille 30 extérieure coulissante axialement et comportant une surface de came 34 coopérant avec la partie sphérique 35 du verrou pour actionner le verrou 7. La douille 30 est en appui contre un jonc 32 par l'intermédiaire d'une bague 31. La collerette 14 du mâle 10 se trouve entourée de au moins 180° par la demi-collerette 12 du verrou 7 qui se trouve en position de repos. Le clapet 5 est ouvert.

Pour obtenir la position désaccouplée de sécurité, on effectue une translation de la douille 30 dans le sens amont. La partie sphérique 35 du verrou 7 suit la rampe 34 de la douille 30, faisant ainsi effectuer au verrou 7 une translation perpendiculaire à l'axe longitudinal de la pièce mâle 10 et de la pièce femelle 3. Cette translation vers le bas permet le dégagement de la collerette 14 de la demi-collerette 12. A ce moment la pièce mâle recule poussée par le ressort 2 par l'intermédiaire du clapet 5 et du joint 6. Lorsque la partie sphérique 35 du verrou 7 se trouve sur la partie cylindrique 36 de la douille 30, la demi-collerette 11 du verrou 7 entoure sur au moins 180° la collerette 14 de la pièce mâle pour la retenir dans la pièce femelle 1. Dans cette position, le clapet 5 est revenu buter sur son joint 4, bloquant ainsi la pression en amont. La partie frontale 24 a quitté le joint 6, mettant ainsi à l'air libre la pression du côté aval par l'intermédiaire des trous 28 et 29, via les orifices 27 pratiqués dans le clapet 5. La douille 30 en position arrière maintient le verrou 7 dans cette position ce qui fait que la pièce mâle ne peut pas être dégagée. La douille en position arrière laisse apparaître une bague de couleur 31 qui indique que le coupleur est en position de sécurité.

Pour désaccoupler complètement le coupleur, on ramène la douille 30 à sa position initiale par translation dans le sens aval. Ainsi, la partie sphérique 35 du verrou 7 quitte l'alésage cylindrique 36 et revient dans le logement 37 pratiqué dans la douille 30. Le verrou 7 suit la rampe 34, poussé par le ressort 9. Ainsi, la collerette 14 se dégage de la demi-collerette 11 et la pièce mâle peut être complètement dégagée.

La douille 30 peut comporter, autour de sa périphérie au niveau de sa partie la plus mince des trous radiaux qui permettent de mieux dégager le fluide résiduel sortant de l'ouverture 28 lors de la phase intermédiaire de désaccouplement.

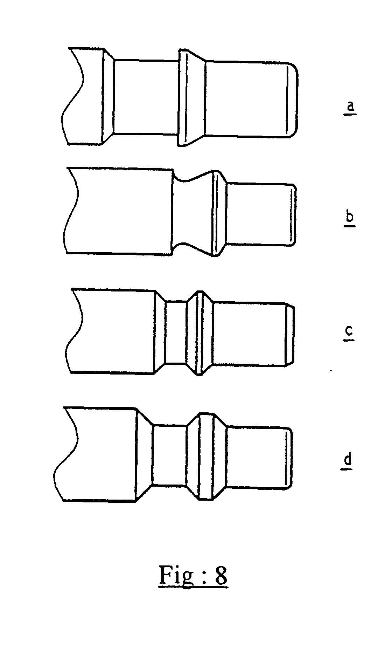

La figure 8 montre quatre exemples de pièces mâles comportant différents profils de collerette et qui sont particulièrement bien adaptées comme pièces mâles de la présente invention. Les différents profils de collerette représentés sur les figures 8a à 8d sont des profils dont les normes sont ISO 6150 A (fig:8a), ISO 6150 B (US MIL C 4109) (fig:8b), ISO 6150 C (fig:8c), ARO 210 (fig:8d). Il est évident que n'importe quel profil de collerette peut être utilisé, pour autant que la forme des projections dans l'alésage du verrou de la pièce femelle soit adaptée conformément à la présente invention à la forme de la collerette de la pièce mâle.

L'invention réside dans le principe de prévoir un désaccouplement complet d'un coupleur par une seule poussée sur le verrou et son relâchement permettant un dégagement partiel entre les pièces mâle et femelle et le maintien de celles en position partiellement désaccouplée de sécurité, puis une poussée axiale sur la pièce mâle dans la direction de l'accouplement permettant le dégagement complet de la pièce mâle. Lors de la phase de dégagement partiel de la pièce mâle dans la pièce femelle, la pression de tout fluide en aval du clapet peut rapidement s'échapper et ceci avant que la phase de désengagement complet puisse être effectuée.

Pour permettre l'échappement du fluide sous pression en aval du clapet de la pièce femelle, il est nécessaire de prévoir un trajet de recul pour la pièce mâle lors de la poussée sur le verrou, entre sa position complètement accouplée et sa position partiellement désaccouplée, qui permet à la fois de fermer le clapet et d'ouvrir des voies d'échappement pour ledit fluide.

## Revendications

1. Coupleur rapide à désaccouplement à deux phases permettant le dégagement de la pression d'un fluide dans le coupleur avant le désaccouplement complet, comportant une pièce femelle (1, 3) et une pièce mâle (10), la pièce femelle (1, 3) comportant du côté amont un clapet d'obturation (5) qui est ouvert lorsque les pièces femelle et mâle sont accouplées et qui est fermé lors du désaccouplement, la pièce mâle (10) comportant une surface extérieure munie d'une collerette (14), ainsi qu'un verrou (7) dans la pièce femelle, mobile dans un sens radial et comportant un alésage orienté dans le sens axial de la pièce femelle et traversé par la pièce mâle, ledit verrou comportant sur la surface de son alésage deux projections de rétention (11, 12) destinées à coopérer séparément avec la collerette (14) de la pièce mâle et séparées l'une de l'autre dans le sens axial, caractérisé en ce que les deux projections (11, 12) dans l'alésage du verrou ont chacune la forme d'une demi-collerette dont au moins une première (12) est formée par deux surfaces essentiellement en forme de serpe conique, surfaces dont au moins une qui est orientée vers l'amont est susceptible d'épouser au moins 180° de la collerette (14) de la pièce mâle.

2. Coupleur rapide de sécurité selon la revendication 1, caractérisé en ce que la surface orientée vers l'amont de la seconde demi-collerette tronconique (11) située axialement le plus en aval du verrou (7) est également susceptible d'épouser au moins 180° de la collerette (14) de la pièce mâle (10).

3. Coupleur rapide de sécurité selon l'une des revendications 1 ou 2, caractérisé en ce que la surface orientée vers l'aval de la demi-collerette tronconique (12) située axialement le plus en amont du verrou (7) entoure la collerette (14) sur moins de 180°.

4. Coupleur rapide de sécurité selon l'une quelconque des revendications 1 à 3, caractérisé en ce que le verrou (7) est déplacé radialement par la main.

5. Coupleur rapide de sécurité selon l'une quelconque des revendications 1 à 3, caractérisé en ce que le verrou (7) est activé par la surface de came (34) d'une douille (30) qui se déplace axialement par la main.

6. Coupleur rapide selon l'une quelconque des revendications 1 à 5, caractérisé en ce que la partie femelle (1, 3) comporte un premier joint d'étanchéité (4) destiné à rendre étanche l'intérieur de la pièce femelle (1, 3) vers l'extérieur lorsque le clapet (5) se trouve dans une position ouverte et de plus rend étanche ledit clapet (5) lorsqu'il se trouve dans sa position fermée.

7. Coupleur rapide selon l'une quelconque des revendications 1 à 6, caractérisé en ce que la partie femelle (1, 3) comporte un second joint d'étanchéité (6) destiné à rendre étanche l'accouplement entre le clapet (5) et la partie mâle (10).

8. Coupleur rapide selon l'une quelconque des revendications 1 à 7, caractérisé en ce que le clapet (5) comporte un cylindre vide comportant une partie de tête (16) fermée et une partie cylindrique (17) munie de trous (18) obturables par ledit premier joint d'étanchéité (4) lorsque le clapet est fermé, ladite partie cylindrique (17) comportant deux parties à diamètre différent d'un alésage axial de ladite partie cylindrique, formant entre elles un épaulement et une rainure circonférentielle qui sert de siège pour un second joint d'étanchéité (6), la partie à diamètre supérieur recevant une partie frontale (24) de la partie (10).

9. Coupleur rapide selon l'une quelconque des revendications 1 à 8, caractérisé en ce que la partie femelle (1, 3) comporte un ressort (2) sollicitant le clapet (5) dans sa position de fermeture.

10. Coupleur rapide selon l'une des revendications 8 ou 9, caractérisé en ce que la partie de tête (16) du clapet (5) comporte une surface tronconique (19) qui est susceptible d'épouser une surface tronconique du premier joint d'étanchéité (4).

11. Coupleur rapide selon l'une quelconque des revendications 8 à 10, caractérisé en ce que la partie à diamètre supérieur de la partie cylindrique (17) du clapet (5) comporte plusieurs alésages (27) radiaux en aval du second joint d'étanchéité (6), permettant, lorsque le clapet (5) est fermé et lorsque l'extrémité (24) de la partie mâle (10) est dégagée du joint (6) du clapet (5), de dégager le fluide sous pression résiduelle qui se trouve en aval du clapet (5), vers l'extérieur.

12. Coupleur rapide selon l'une quelconque des revendications 1 à 11, caractérisé en ce que la pièce femelle comporte en une position avale par rapport au clapet (5) un alésage radial (21) recevant le verrou (7), cet alésage radial s'ouvre d'un côté de la partie femelle (1, 3) par une ouverture suffisamment grande pour le passage du verrou (7) et à l'extrémité opposée dudit alésage radial (21) de la pièce femelle se trouve une ouverture (28) plus petite en communication avec les ouvertures radiales (27) de la partie à diamètre supérieur de la partie cylindrique (17) du clapet (5), pour permettre l'échappement du fluide résiduel en aval du clapet, vers l'extérieur de la partie femelle avant le désaccouplement complet des parties mâle (10) et femelle (1, 3).

13. Coupleur rapide selon la revendication 12, caractérisé en ce qu'il comprend une ouverture (29) aménagée dans la partie frontale de la pièce femelle ou toute autre ouverture permettant la décompression du fluide en aval du clapet (5).

## Patentansprüche

1. Schnellverbindung mit Entkupplung in zwei Stufen, welche das Ablassen des Druckes einer Flüssigkeit in der Kupplung vor der vollständigen Entkupplung ermöglicht, bestehend aus einem weiblichen Teilstück (1,3) und einem männlichen Teilstück (10), wobei das weibliche Teilstück (1,3) an der oberen Seite eine Verschlusskappe (5) aufweist, welche geöffnet ist, wenn die weiblichen und männlichen Teilstücke angekuppelt sind, und die bei der Entkupplung geschlossen ist, während das männliche Teilstück (10) eine äussere Fläche mit einem Kragen (14) aufweist, sowie mit einer Verriegelung (7) im weiblichen Teilstück, das in radialer Richtung beweglich ist und eine Zylinderbohrung aufweist, welche in die axiale Richtung des weiblichen Teilstückes orientiert ist und vom männlichen Teilstück durchquert wird, und wobei die genannte Verriegelung auf der Oberfläche ihrer Bohrung zwei Rückhaltesicherungen aufweist, die dazu bestimmt sind, getrennt mit dem Kragen (14) des männlichen Teilstückes und einer von beiden getrennt in axialer Richtung zu kooperieren, dadurch gekennzeichnet, dass die zwei Vorsprünge (11,12) in der Zylinderbohrung der Verriegelung jede die Form eines Halb-Kragens hat, von denen wenigstens eine (12) aus zwei Oberflächen, im Wesentlichen in Form einer konischen Hippe, gebildet ist, von denen mindestens eine, welche nach der oberen Seite orientiert ist, fähig ist, wenigstens 180 Grad des Kragens (14) des männlichen Teilstückes zu umfassen.

2. Sicherheitsschnellverbindung nach Anspruch 1, dadurch gekennzeichnet, dass die nach der oberen Seite orientierte Oberfläche des zweiten kegelstumpfförmigen Halb-Kragens (11), welcher axial am weitesten nach der unteren Seite der Verriegelung (7) orientiert ist, auch fähig ist, wenigstens 180 Grad des Kragens (14) des männlichen Teilstückes (10) zu umfassen.

3. Sicherheitsschnellverbindung nach einem der Ansprüche 1 oder 2, dadurch gekennzeichnet, dass die nach der unteren Seite orientierte Oberfläche des kegelstumpfförmigen Halb-Kragens (12), welcher axial am weitesten nach der oberen Seite der Verriegelung (7) orientiert ist, den Kragen (14) auf weniger als 180 Grad umgreift.

4. Sicherheitsschnellverbindung nach einem der Ansprüche 1 bis 3, dadurch gekennzeichnet, dass die Verriegelung (7) radial von Hand verschoben wird.

5. Sicherheitsschnellverbindung nach einem der Ansprüche 1 bis 3, dadurch gekennzeichnet, dass die Verriegelung (7) durch die Nockenfläche (34) einer Hülse (30) aktiviert wird, welche von Hand axial verschoben wird.

6. Schnellverbindung nach einem der Ansprüche 1 bis 5, dadurch gekennzeichnet, dass der weibliche Teil (1,3) eine erste Dichtung (4) beinhaltet, welche dazu bestimmt ist, das Innere des weiblichen Teiles (1,3) gegen das Äussere abzudichten, wenn das Klappenventil (5) sich in einer geöffneten Position befindet und darüber hinaus abgedichtet wird, wenn das genannte Klappenventil sich in seiner geschlossenen Stellung befindet.

7. Schnellverbindung nach einem der Ansprüche 1 bis 6, dadurch gekennzeichnet, dass der weibliche Teil (1,3) eine zweite Dichtung (6) beinhaltet, welche dazu bestimmt ist, die Ankuppelung zwischen dem Klappenventil (5) und dem männlichen Teil (10) abzudichten.

8. Schnellverbindung nach einem der Ansprüche 1 bis 7, dadurch gekennzeichnet, dass das Klappenventil (5) einen leeren Zylinder aufweist, der einen geschlossenen Kopfteil (16) und einen zylindrischen Teil (17) aufweist, der mit durch die genannte Dichtung (4) abdeckbaren Löchern (18) versehen ist, wenn die Klappe geschlossen ist, wobei der genannte zylindrische Teil (17) aus zwei Teilen mit unterschiedlichem Durchmesser einer axialen Zylinderbohrung des genannten zylindrischen Teiles besteht, zwischen denen eine Erhöhung und eine kreisförmige Rinne (Nut) gebildet ist, welche als Sitz für eine zweite Dichtung (6) dient, während das Teil mit dem grösseren Durchmesser den frontalen Teil (24) des männlichen Teiles (10) aufnimmt.

9. Schnellverbindung nach einem der Ansprüche 1 bis 8, dadurch gekennzeichnet, dass der weibliche Teil (1,3) eine Feder (2) enthält, um das Klappenventil (5) in seine geschlossene Position zu bringen.

10. Schnellverbindung nach einem der Ansprüche 8 oder 9, dadurch gekennzeichnet, dass der Kopfteil (16) des Klappenventils (5) eine kegelstumpfförmige Oberfläche (19) aufweist, welche geeignet ist, eine kegelstumpfförmige Oberfläche der ersten Dichtung (4) zu umgreifen.

11. Schnellverbindung nach einem der Ansprüche 8 bis 10, dadurch gekennzeichnet, dass der Teil mit dem grösseren Durchmesser des zylindrischen Teils (17) des Klappenventils (5) unterhalb der zweiten Dichtung (6) mehrere radiale Zylinderbohrungen (27) enthält, die ermöglichen, wenn das Klappenventil (5) geschlossen ist und wenn das äusserste Ende (24) des männlichen Teiles (10) von der Dichtung (6) des Klappenventils (5) gelöst ist, die unter Druck stehende Restflüssigkeit, welche sich unterhalb des Klappenventils (5) befindet, nach aussen freizusetzen.

12. Schnellverbindung nach einem der Ansprüche 1 bis 11, dadurch gekennzeichnet, dass der weibliche Teil in einer unteren Position im Verhältnis zum Klappenventil (5) eine radiale Zylinderbohrung (27 enthält), welche die Verriegelung (7) aufnimmt und sich nach einer Seite des weiblichen Teiles 81,3) durch eine für die Passage der Verriegelung (7) ausreichend grosse Öffnung öffnet, während sich am äussersten Ende des weiblichen Teiles gegenüber der genannten radialen Zylinderbohrung (21) eine kleinere Öffnung (28) befindet, welche in Verbindung mit den radialen Öffnungen (27) des Teiles mit dem grösseren Durchmesser des zylindrischen Teiles (17) des Klappenventils (5) steht, um das Ausströmen der Restflüssigkeit unterhalb des Klappenventils aus dem weiblichen Teil nach aussen zu ermöglichen, bevor die männlichen (10) und weiblichen (1,3) Teile vollständig entkuppelt sind.

13. Schnellverbindung nach einem der Ansprüche 1 bis 11, dadurch gekennzeichnet, dass sie eine im frontalen Teil des weiblichen Teiles eingebaute Öffnung (29) oder jegliche andere Öffnung enthält, welche die Dekompression der Flüssigkeit unterhalb des Klappenventils (5) erlaubt.

## Claims

1. A quick coupler that uncouples in two stages enabling the pressure of a fluid in the coupler to be released prior to complete uncoupling, the coupler comprising a female part (1, 3) and a male part (10), the female part (1, 3) having a closure valve (5) at its upstream side, the closure valve being open when the female and male parts are coupled together and is closed while they are being uncoupled, the male part (10) having an outside surface provided with a collar (14), and the female part including a latch (7) which is movable in a radial direction and which includes a bore extending in the axial direction of the female part and through which the male part passes, said latch including on the surface of its bore two retaining projections (11, 12) designed to cooperate separately with the collar (14) of the male part, which projections being offset from each other in the axial direction, characterised in that the two projections (11, 12) in the bore of the latch are each in the form of a half-collar with at least a first one of them (12) being formed by two surfaces that are essentially conical sickle-shaped, with at least the upstream facing surface being suitable for fitting closely over at least 180° of the collar (14) of the male part.

2. The safety quick coupler according to claim 1, characterised in that the upstream-facing surface of the second frustoconical half-collar (11) situated axially further downstream in the latch (7) is also suitable for fitting closely over at least 180° of the collar (14) of the male part (10).

3. The safety quick coupler according to claim 1 or 2, characterised in that the downstream facing surface of the frustoconical half-collar (12) situated axially further upstream in the latch (7) surrounds the collar (14) over less than 180°.

4. The safety quick coupler according to any one of claims 1 to 3, characterised in that the latch (7) is displaced radially by hand.

5. The safety quick coupler according to any one of claims 1 to 3, characterised in that the latch (7) is activated by the camming surface (34) of a bushing (30) which is moved axially by hand.

6. The quick coupler according to any one of claims 1 to 5, characterised in that the female part (1, 3) includes a first sealing ring (4) for sealing the inside of the female part (1,3) relative to the outside when the valve (5) is in an open position, and also seals said valve (5) when it is in its closed position.

7. The quick coupler according to any one of claims 1 to 6, characterised in that the female part (1, 3) includes a second sealing ring (6) for sealing the coupling between the valve (5) and the male part (10).

8. The quick coupler according to any one of claims 1 to 7, characterised in that the valve (5) comprises an empty cylinder including a closed head portion (16) and a cylindrical portion (17) provided with holes (18) that can be closed by said first sealing ring (4) when the valve is closed, said cylindrical portion (17) including two portions with different diameters of an axial bore in said cylindrical portion, forming between them a shoulder and a circumferential groove which serves as a seat for said second sealing ring (6), the larger diameter portion receiving a front portion (24) of the male part (10).

9. The quick coupler according to any one of claims 1 to 8, characterised in that the female part (1, 3) includes a spring (2) urging the valve (5) into its closed position.

10. The quick coupler according to claim 8 or 9, characterised in that the head portion (16) of the valve (5) includes a frustoconical surface (19) which is suitable for fitting closely against a frustoconical surface of the first sealing ring (4).

11. The quick coupler according to any one of claims 8 to 10, characterised in that the larger diameter portion of the cylindrical portion (17) of the valve (5) includes a plurality of radial bores (27) downstream from the second sealing ring (6), making it possible, when the valve (5) is closed and when the end (24) of the male part (10) is disengaged from the sealing ring (6) of the valve (5), to exhaust the fluid under residual pressure that is to be found downstream from the valve (5) towards the outside.

12. The quick coupler according to any one of claims 1 to 11, characterised in that the female part includes, in a downstream position relative to the valve (5), a radial bore (21) receiving the latch (7), said radial bore opening out to one side of the female part (1, 3) via an opening that is large enough to pass the latch (7), and includes, at the end opposite to said radial bore (21) of the female part, an opening (28) of smaller size in communication with the radial openings (27) of the larger diameter portion of the cylindrical portion (17) of the valve (5) to enable the residual fluid downstream from the valve to escape to the outside of the female part prior to the male and female parts (10; 1, 3) being fully uncoupled.

13. The quick coupler according to claim 12, characterised in that it includes an opening (29) formed in the front portion of the female part, or any other opening allowing the fluid downstream from the valve (5) to be decompressed.
